# EUROPEAN PATENT APPLICATION

(11) **EP 0 560 460 A1**
(43) Date of publication of application: **15.09.1993**
(21) Application number: 93200724.8
(22) Date of filing: 12.03.1993
(51) Int. Cl.: B65G 53/20

(54) **Closed channel for the transportation of fluidizable material**

(30) Priority: 13.03.1992 NO 920981
(71) Applicant: NORSK HYDRO a.s., N-0257 Oslo 2 (NO)
(72) Inventor: Nagell, Bernt, NO-5500 Haugesund (NO); Dalen, Kjell Magne, NO-5500 Haugesund (NO)
(74) Representative: Bleukx, L.L.M.

(57) **Abstract**

A closed channel (1) for the transportation of fluidisable material in the form of powder or similar is provided with an easily detachable fluidising element (2) to which air is supplied through the walls of the channel via a pipe socket (8). The fluidising element consists of a long panel element (3) on to the upper side of which is fixed a fluidising canvas (4). Air is supplied between the panel and the canvas via the pipe socket (8) through a hole (7) in the panel.

## Description

The present invention concerns a closed channel or pipe for the transportation of fluidisable material from a storage area to an area, located some distance away from the latter area, which is to be supplied with the material.

For example, a channel of this type can be used for the transportation of fluidisable material in the form of powder from a silo to a packing plant for filling the material into bags, sacks etc. or it can be used for the transportation of aluminium oxide from a silo or supply tank to a point feeder in an electrolysis cell for the production of aluminium.

The advantage of such channels is, among other things, that they can transport large or small quantities of material in a continuous stream over large distances without significant consumption of energy. However, the place from which the material is being supplied must be located in a slightly more elevated position than the place to which the material is to be fed, as the channels require a certain angle of descent to enable the material to flow.

In the present case, the term "fluidisable material" means all types of materials which occur in powder form and which have such granulometry and cohesion that the low feed speed of the air which is blown in results in a reduction of the inner frictional forces. Such materials include, for example, aluminium oxide, aluminium fluoride, cements, gypsum, milk powder, flour etc.

Open channels do exist with a fluidisation canvas or similar in the base, through which the air is added to fluidise the material in the channel. A considerable disadvantage of such open channels is that dirt and impurities from the surroundings can easily be mixed in with the material in the channel and may ruin or contaminate it. A further disadvantage is that during fluidisation dust is swirled up and contaminates the surroundings. Another disadvantage is that the material can easily flow over the sides of the channel in situations where a blockage occurs in the channel or where the material is not removed at the discharge end.

Closed channels also exist consisting of two U-shaped parts, an upper part and a lower part, which are fastened together by means of a flange connection and where a fluidisation canvas is placed between the two parts, dividing the channel into an upper and a lower channel. Air is introduced into the lower channel and fluidises the material which is in the upper channel. This solution is costly since two different U-shaped parts with flanges must be made. Moreover, in practice, it has proved difficult to seal such channels at the flange connection even if a large number of screws are used to hold the flanges together. In addition, it is expensive to carry out maintenance, for example replacing the fluidisable canvas, as the whole channel must be disassembled. Moreover, closed channels exist which are provided with detachable air supply elements (fluidisation elements) in the form of perforated pipes or panels with canvas etc. An example of such a channel was shown in DK Publication no. 139.193. Channels of this type are simple and inexpensive to manufacture and maintain, as well as being sealed against contamination from the surroundings. However, one significant disadvantage is that their transportation capacity is low. The reason for this is that a great deal of friction arises between the powder above the fluidising element and the stationary powder outside the fluidisation area.

With the present invention, a channel has been designed which is not encumbered with the above disadvantages, ie. which is simple and inexpensive to manufacture, completely sealed, simple and easy to maintain and which has a large transportation capacity.

The invention is characterised in that the channel consists of a long, hollow body in the form of a pipe with a square, circular or other shape and that in the pipe there is an easily detachable fluidising element of approximately the same length, to which fluidising element air is added through the walls of the channel via a pipe socket or similar device, and that walls are arranged on or in connection with the fluidising element so that the material above the fluidising element is fluidised right against the walls.

By making the fluidising element easily detachable from the channel, maintenance can be undertaken easily, for example replacing the fluidising element, and the channel and the fluidising element can easily be cleaned, sandblasted etc. Moreover, since walls have been arranged in connection with the fluidising element so that the material is fluidised right against the walls, reduced friction is achieved and thus greater transportation capacity. This increase in transportation capacity was measured in tests at 30-40 %.

In the following, the invention will be described in greater detail by means of examples only and with reference to the attached drawings, where:
- Figure 1: shows in cross-section an example of a channel in accordance with the present invention and
- Figure 2: shows in cross-section an alternative design

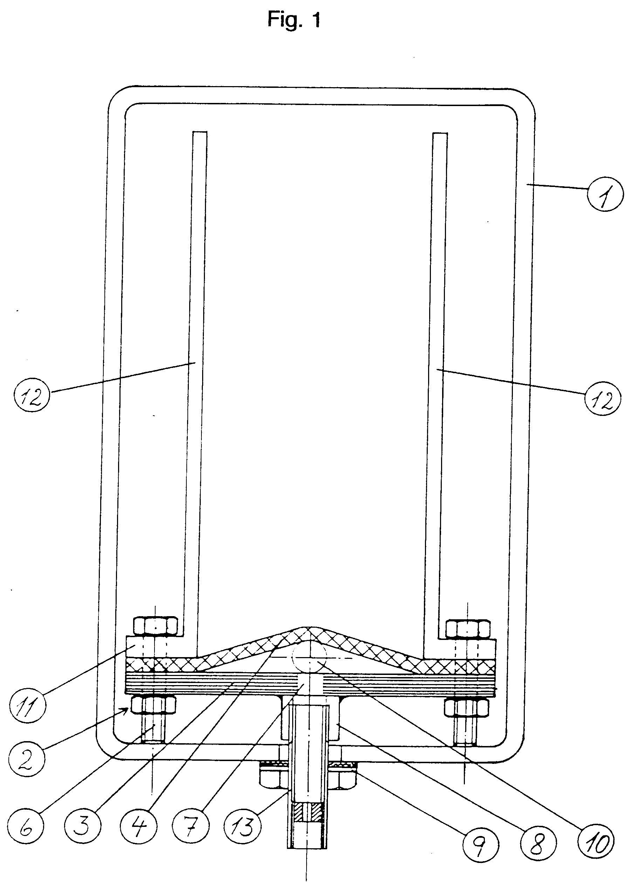

Figure 1 shows in cross-section the preferred design of a channel which is made from a square pipe 1. A fluidising element 2 is fixed in the pipe; it is made of a long panel element 3 with a fluidisation canvas 4. The fluidisation canvas 4 is fastened to the panel element 3 by means of a clamp connection at each of the side edges which in the present design is in the form of sides of angles 11 for detachable walls 12.

The walls have a length equivalent to the fluidising element 2 and are kept in place by means of throughgoing bolts 6. Air is supplied to the fluidising element 2 through a hole 7 in the panel element 3 and via a connection socket 8. A throughgoing pipe socket 13 which is connected with the connection socket 8 extends through the base of the channel and is designed for connection with a pipe or hose on the outside. A sealing device 9 ensures a seal between the pipe socket and the wall of the channel. It should be noted that other connections than the one shown here may be used, for example a shoulder nipple with a pressure cone.

As can also be seen from figure 1, a circular distance piece 10 has been positioned between the fluidising canvas 4 and the panel element 3. The purpose of this is to ensure a more regular distribution of air along the whole fluidising element.

The channel in accordance with the present invention may, in fact, be made of any length required. However, it may be more practical to manufacture the channel in standard lengths, for example in lengths of 6 or 12 metres and to join such standard lengths using connection pieces, flanges etc. where necessary.

It will be clear that the length of the fluidising element 2, including the canvas 4, the panel element 3 and the walls 12, must be approximately the same as the length of the channel to ensure that the material is fluidised along the full length of the channel.

The number of pipe connections 13 can vary depending on, among other things, the dimensions of the channel and the type of material which is to be transported. However, it is necessary to ensure that sufficient air is supplied to ensure the necessary fluidisation of the material in the channel. In this connection it should be noted that the pipe connections can, where appropriate, be provided with nozzles or other forms of restrictions to enable individual supply of air.

The above shows and describes an example where a square tube is used with a flat panel element and a clamp connection to fasten the canvas to the panel element.

It should be noted that the invention such as it is defined in the claims is not limited to this design. Thus the channel may be circular or have any other shape. Moreover, the panel element may be curved or have any other shape and the canvas may be fastened to the panel element by means of adhesive or similar.

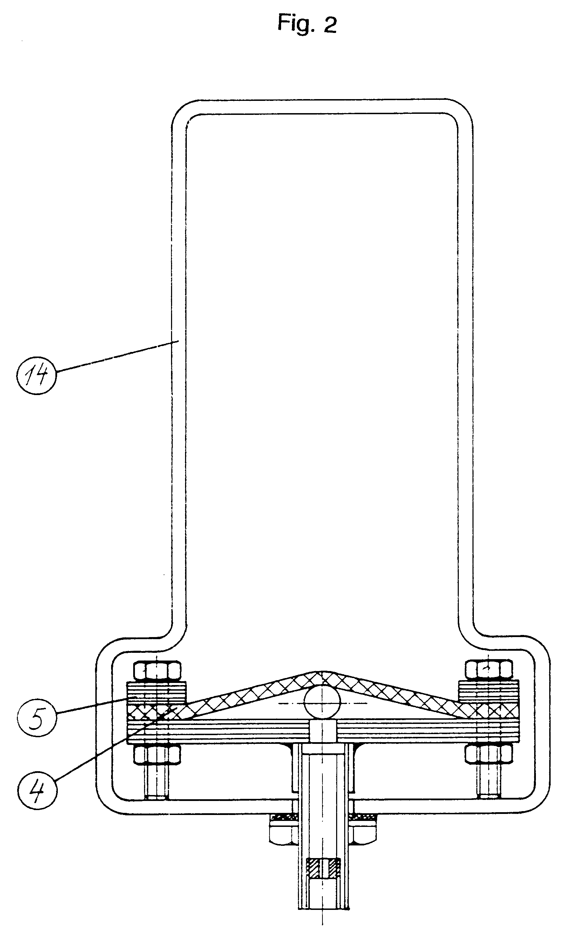

As an example of an alternative design, figure 2 shows a closed channel in which the walls of the channel itself, in the area above the fluidisation element, form "friction surfaces" for the material which is transported. This solution also achieves reduced friction and increased transportation capacity in that the material is fluidised right out to the walls; however, the disadvantage of such a solution is that the whole channel must be replaced in the event of wear on the walls, as opposed to the solution shown in figure 1, where the separate walls 12 can be replaced.

In figure 2 the fluidisation canvas is held in place by means of a longitudinal clamping strip 5; however, the design with regard to the fluidising element is otherwise the same as shown in figure 1.

The use of walls 12 in direct connection with the fluidising element as shown here ensures that the material which is transported in the channel is fluidised right against the walls. And, as mentioned earlier, this results in the friction being reduced and the capacity of the channel is thus increased.

## Claims

1. A closed channel (1) for the transportation of fluidisable material in the form of powder etc. from a storage area to an area, located some distance away from the latter area, which is to be supplied with the material,
**characterised in that**
an easily detachable fluidising element (2) is fixed in the channel, to which air is supplied through the walls of the channel by means of a connection (8, 13) and that walls (12, 14) are arranged either on or in connection with the fluidising element (2) so that the material above the fluidising element is fluidised right against the walls.

2. Closed channel in accordance with claim 1,
**characterised in that**
the fluidising element consists of a long panel element (3), that a fluidising canvas (4) is fixed on the upper side of the panel element, that air is supplied between the panel and the canvas via a pipe socket (8) through a hole (7) in the panel and that the walls (12) are fastened to and detachable from the panel element (3).

3. Closed channel in accordance with claim 2,
**characterised in that**
the canvas (4) is fastened to the panel by means of a clamp connection consisting of clamping strips (5) or sides of angles (11) on the walls (12) and through bolts (6) with nuts or self-threading screws.

4. Closed channel in accordance with claims 1 and 2,
**characterised in that**
a long distancing element (10) is placed between the canvas and the panel.
